Europäisches Patentamt

European Patent Office

Office européen des brevets

(11) Publication number: **0 194 934**
**A1**

## EUROPEAN PATENT APPLICATION

(21) Application number: 86400478.3

(22) Date of filing: 06.03.86

(51) Int. Cl.⁴: **A01N 25/34** , A01N 25/18

(30) Priority: 07.03.85 JP 45632/85

(43) Date of publication of application:
17.09.86 Bulletin 86/38

(84) Designated Contracting States:
DE FR IT

(71) Applicant: Shin-Etsu Chemical Co., Ltd.
6-1, Ohtemachi 2-chome
Chiyoda-ku Tokyo 100(JP)

(72) Inventor: Nagura, Shigehiro
2-1-4-7, Minato-machi
Joetsu-shi Niigata-ken(JP)
Inventor: Ogawa, Kinya
1-7-32, Shiboku Miyamae-ku
Kawasaki-shi Kanagawa-ken(JP)
Inventor: Yamamoto, Akira
2-14-45, Minato-machi
Joetsu-shi Niigata-ken(JP)
Inventor: Aiba, Noboru
3-2-21, Kitamoto-cho
Joetsu-shi Niigata-ken(JP)

(74) Representative: Armengaud, Alain et al
Cabinet ARMENGAUD AINE 3 Avenue Bugeaud
F-75116 Paris(FR)

(54) A tubular body for sustainedly releasing vapor of a vaporizable alcoholic substance.

(57) The tubular body of the invention is useful as a dis penser for sustainedly releasing vapor of a vaporizable alco holic substance such as sex pheromones of insects. The tubular body is shaped of a copolymeric resin of 99-80 % by weight of ethylene and 1-20 % by weight of vinyl acetate and character ized by the dimensions including the average inner diameter of 0.4-3mm, length of outer circumference of 2-20 mm and length of 10-1,000 mm, preferably, with a ratio A/S of the outer cir cumference A in mm to the cross sectional area S of the bore in mm² in the range from 2 to 20 mm⁻¹. The tubular body is preferably bonded side-by-side with a wire of metal having a Brinell hardness of 65 or below to facilitate hanging works of the body on twigs of trees in the field.

# F I G. 1

# A TUBULAR BODY FOR SUSTAINEDLY RELEASING VAPOR OF A VAPORIZABLE ALCOHOLIC SUBSTANCE

## BACKGROUND OF THE INVENTION

The present invention relates to a tubular body for sustainedly releasing vapor of the vaporizable alcoholic substance or, more particularly, to a tubular body containing a vapor izable alcoholic substance therein, of which the vapor diffuses through and is released out of the wall of the tubular body to be emitted to the atmospheric air at a controlled and uniform rate over a desired period of time.

As a means for environmental control, it is eagerly desired in recent years to develop a practical method for sustainedly releasing vapor of a vaporizable alcoholic substance, such as some of sex pheromones of insects and the like, capa ble of exhibiting activity when contained in a trace concen tration in the air by being released toward a desired spot of the environmental atmosphere at a well controlled rate over a long period of time.

With an object to solve the above described problem, pro posals have been made in U.S. Patents No. 3,539,465 and No. 3,577,515, according to which the vaporizable substance is contained in microcapsules and released through the walls of the microcapsules. Such a method of encapsulation in microcap sules is practically disadvantageous because a considerably large portion of the vaporizable substance is lost in the process of encapsulation and it is a difficult matter to pre pare microcapsules from which the vapor of the vaporizable alcoholic substance contained therein can be released at a uniform rate for a long period of time over one month or longer.

Another approach to the solution of this problem is pro posed in U.S. Patent No, 4,017,030, according to which the va porizable substance is contained in hollow fibers. This method is also practically disadvantageous due to the un duly large rate of vapor releasing and not suitable when a relatively large amount of the vaporizable substance is desired to be contained in such hollow fibers.

## SUMMARY OF THE INVENTION

The present invention therefore has an object to pro vide a solution for the above described problem by means of a tubu lar body containing a vaporizable alcoholic sub stance of which the vapor diffuses through and released out of the wall of the tubular body toward the ambience at a controlled rate.

Thus, the tubular body for sustainedly releasing vapor of a vaporizable alcoholic substance provided by the inven tion comprises:

(a) a tubular body shaped of a copolymeric resin of eth ylene and vinyl acetate, of which the content of vinyl acetate is in the range from 1 to 20 % by weight, and having an average in ner diameter in the range from 0.4 to 3 mm, length of outer circumference in the range from 2 to 20 mm and length in the range from 10 to 1,000 mm; and

(b) a vaporizable alcoholic substance at least partly filling the bore of the tubular body, the tubular body being sealed at both ends after being filled with the vaporizable alcoholic substance.

In a preferable embodiment of the inventive tubular body, the tubular body is integrally bonded together side-by-side with a wire, optionally, coated with a plastic resin having a specific diameter and made of a metal having a specific Bri nell hardness.

## BRIEF DESCRIPTION OF THE DRAWING

FIGURE 1 is a perspective view of a tubular body of the invention integrally bonded together side-by-side with a res in-coated metal wire showing a cross section at one end.

FIGURES 2a, 2b and 2c each illustrate a cross section of a circular tube, flattened tube and star-like tube, respec tively.

FIGURES 3, 4 and 5 are each a graph showing the .remaining amount of the vaporizable alcoholic substance in the inventive tubular body as a function of days of at mospheric exposure in the test described in an Example below.

## DETAILED DESCRIPTION OF THE PREFERRED EMBODIMENTS

As is understood from the above given summarizing de scription, the most characteristic features of the tubular body of the invention for sustainedly releasing vapor of a vaporizable alcoholic substance consist in that the tubular body has specific dimensions and is made of a specific co polymeric synthetic resin of ethylene and vinyl acetate, by virtue of which the tubular body is particularly satisfactory when the vaporizable substance contained therein is an alcoholic compound in comparison with other types of com pounds.

In connection with the dimensions of the inventive tubu lar body, it is a particularly preferable condition that the ratio of the outer circumferential length A given in mm and the cross sectional area S given in $mm^2$ of the bore of the tu bular body to be filled with the vaporizable alcoholic sub stance, i.e. A/S, is in the range from 2 to 20 $mm^{-1}$.

Further, the tubular body of the invention should prefer ably be integrally bonded together side-by-side with a wire having specific diameter and made of a metal having a speci fic Brinell hardness, optionally, coated with a plastic resin so that the tubular body is capable of retaining its bent form to facilitate manual fastening works thereof to, for example, twigs of trees in the case where, for example, the alcoholic substance is a sex pheromone of insets to be controlled.

Another advantage of the inventive tubular body is ob tained from the transparency of the tube walls as a result of use of the specific copolymeric resin of ethylene and vinyl acetate to facilitate easy monitoring of the releasing veloci ty and remaining amount of the vaporizable alcoholic sub stance contained therein, in particular, when the vaporizable sub stance therein is a colored substance or admixed with a coloring agent in advance.

The inventive tubular body should have an average inner diameter in the range from 0.4 to 3 mm or, preferably, from 0.8 to 2 mm, outer circumferential length in the range from 2 to 20 mm and length in the range from 10 to 1,000 mm. When the inner diameter is smaller than 0.4 mm, the tubular body cannot have a sufficiently large capacity for the vaporizable alco holic substance in addition to the disadvantage in respect of the releasing velocity of the vapor which is not uniform with a relatively large velocity at the initial stage. When the in ner diameter is larger than 3 mm, on the other hand, the re leasing velocity of the vaporizable substance from the tubular body is unduly low, in particular, at the latter half period of releasing.

As is mentioned above, a preferable condition relative to the cross section of the inventive tubular body is that the ratio of S/A, i.e. ratio of the outer circumferential length A in mm and the cross sectional area S in mm² of the bore to be filled with the vaporizable alcoholic substance, is in the range from 2 to 20 mm⁻¹. When the ratio A/S is smaller than 2 mm⁻¹, the releasing velocity of the vaporizable alcoholic substance from the tubular body is undesirably low. When the ration A/S is larger than 20 mm⁻¹, on the other hand, the re leasing velocity thereof is large at the initial stage with rapid decreased in time.

The cross sectional configuration of the tubular body is not particularly limitative including circular, square, star-like and any other forms. Industrially preferable forms are circular, elliptic, wavy and asteriated cross sections. Tubu lar bodies having a relatively large cross sectional area should preferably have a cross sectional configuration with irregularity such as wavy and star-like ones while relatively fine tubular bodies should preferably have a circular or el liptic cross section.

When the vaporizable substance as the subject material of the inventive tubular body is an alcoholic compound, quite sa tisfactory sustained releasability thereof can be obtained by shaping the tubular body of a copolymeric resin of ethylene and vinyl acetate, of which the content of vinyl acetate should be in the range from 1 to 20% by weight or, preferably, from 2 to 20% by weight. The releasing velocity of the vapor izable alcoholic substance out of the inventive tubular body depends on the content of vinyl acetate in the copolymeric resin and may be too low or too high when the content of vinyl acetate in the copolymeric resin is smaller or larger than the above mentioned range.

When the inventive tubular body is integrally bonded to gether side-by-side with a wire, the wire should have a diam eter in the range from 0.5 to 1.5 mm and be made of a metal having a Brinell hardness not exceeding 65. The wire is preferably coated with a plastic resin.

The object of using a wire-bonded tubular body mentioned above is to improve the shape retainability of the tubular body, while a tubular body of the resin alone without side-by-side wire bonding can hardly retain its bent form, so that the tubular body can easily be fastened, for example, to the twigs of trees and the like. In this regard, a low Brinell hardness of the metal is essential and iron or steel wires having a high Brinell hardness are undesirable. Suppose that the inven tive tubular bodies containing an insectan sex pheromone are used by hanging on the twigs of tea trees or fruit trees in a field, in which the picking works of tea leaves or fruits are performed using hand-scissors or machine scissors having blades of relatively low hardness, then the scissor blades may be badly damaged by inadvertently cutting off the tubular bodies integrally bonded with iron wires. Such a disadvantage can be avoided by using a wire of a metal having a relatively low Brinell hardness of 65 or below. In addition, such tubular bodies can be hung on twigs of trees with reliability and with little fatigue of the worker's hand and can be held there without falling by wind or for other reasons so that stability of vapor release of the vaporizable alcoholic substance is en sured over a long period of time. The wire should preferably be made of copper, aluminum or an alloy thereof and the diam eter thereof should be in the range from 0.5 to 1.5 mm. A wire having a diameter smaller than 0.5 mm is insufficient in the strength to retain the deformed configuration of the tubular body while a tubular body bonded with a wire having a too large diameter is disadvantageous due to the increase in the laboriousness of manual bending works and increased costs as a result of the increased consumption of metal wires.

Such tubular body integrally bonded side-by-side with a metal wire is prepared in the following procedure. Thus, a tube of copolymeric resin of ethylene and vinyl acetate is prepared and a wire, optionally, coated with a plastic resin is bonded thereto. Alternatively, a tubular body bonded side-by-side with a plastic-coated metal wire can be prepared by the techniques of coextrusion.

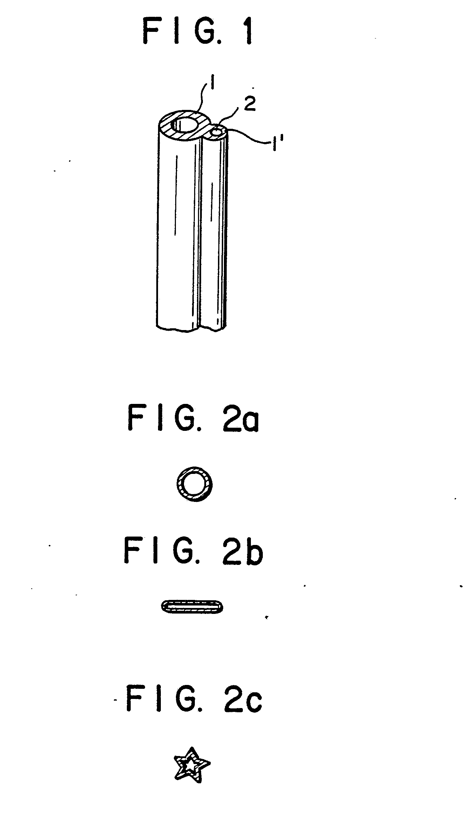

FIGURE 1 of the accompanying drawing schematically illustrates a perspective view of such a tubular body bonded side-by-side with a plastic-coated wire showing a cross section at one end, in which the metal wire 2 sheathed in a coating layer 1' of a plastic resin is bonded side-by-side to the tube 1 by means of a direct fusion or by use of a adhesive. It is option al that two or more wires are bonded to a single tube or two tubes are bonded to a single wire intervening therebetween. Instead of adhesively bonding, a tube and a wire can be united by intertwisting together.

In the next place, the tube is filled with the vaporiz able liquid alcoholic substance by pressurizing at an open end thereof with simultaneous suction of the tube at the other open end. The tubular body thus filled with the vaporizable liquid alcoholic substance is then sealed at suitable inter vals of, for example, 10 cm by means of high frequency welding or other method and cut off at the sealed portions to give a number of desired tubular bodies each filled with the vaporiz able alcoholic substance and sealed at both ends usable as a dispenser of the substance.

When the vaporizable alcoholic substance filling the tu bular body is liable to be decomposed by the irradiation with ultraviolet light, it is a preferable way that the copolymeric resin of ethylene and vinyl acetate for shaping the tubular body is admixed with an ultraviolet absorber or a coloring agent such as dyes and pigments and further the vaporizable alcoholic substance is also admixed with an antioxidant, sta bilizer and the like.

The vaporizable substance or, in particular, alcoholic vaporizable substance as the impregnant of the inventive tu bular body includes various kinds of physiologically active substances such as bactericidal and antibacterial agents, per fumes, medicines, sex pheromones of insects and the like.

In the following, examples are given to illustrate the inventive tubular body useful as a dispenser of a vaporizable alcoholic substance in more detail.

Example 1.

A copolymeric resin of 95 % by weight of ethylene and 5 % by weight of vinyl acetate was molded by extrusion into tubes A, B and C each having the same inner diameter of 0.9 mm but different outer diameters of 5.0, 1.6 and 1.3 mm, respective ly. Each of the tubes was cut in 200 mm lengths and bonded by fusion as is illustrated in FIGURE 1 with a wire of 0.8 mm di ameter made of aluminum having a Brinell hardness of 46 and coated with the same copolymeric resin as above. Each of the tubes A, B and C had a cross sectional area S of 0.64 mm² of the bore while the outer circumferential lengths A were 15.7, 5.0 and 4.1 mm, respectively, so that the values of A/S were 24.7, 7.9 and 6.4 mm⁻¹, respectively.

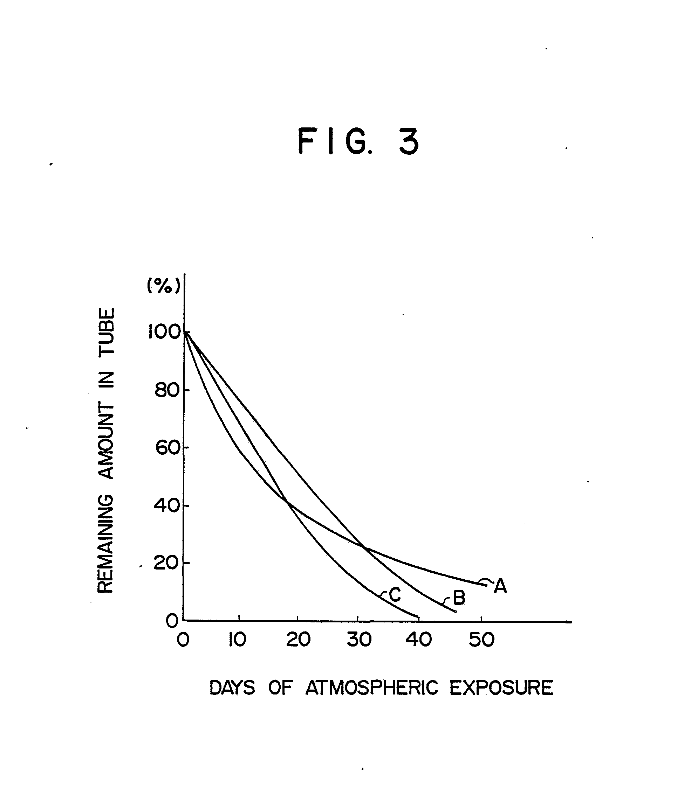

Each of the thus prepared tubular bodies was filled with 90 mg of a mixture composed of 49 % by weight of E, E-8, 10-do decadienol, 49% by weight of dodecanol and 2 % by weight of tetradecanol and sealed at both ends to prepare tubular bodies useful as a dispenser of the vaporizable alcoholic substances. The tubular bodies thus filled with the vaporizable alcoholic mixture were kept at 40°C to examine the velocity of release of the vaporizable alcoholic mixture through the tube walls to give the results graphically shown in FIGURE 3 by the percen tage of the remaining mixture in the tubular bodies as a func tion of days of keeping. As is clear from tubular bodies B and C exhibited quite satisfac tory behaviour of vapor releasing with sufficiently uniform velocity while the vapor-releasing velocity from the tubular body A was large at the initial stage with rapid decrease of the releasing ve locity to prove not to be satisfactory as a dispenser of the vaporizable alcoholic substances.

Example 2.

A copolymeric resin of 88 % by weight of ethylene and 12 % by weight of vinyl acetate was molded by extrusion into tubes D, E and F each having the same outer diameter of 2.0 mm to give an outer circumferential length A of 6.28 mm but dif ferent inner diameters of 1.4, 1.0 and 0.38 mm, respectively. The outer circumferential lengths A in mm and the cross sec tional areas of the bore S in $mm^2$ as well as the ratio of A/S in $mm^{-1}$ of these tubes were shown in Table 1 below.

Each of the tubes D, E and F was cut in 50 mm lengths and filled with ethyl alcohol followed by sealing at both ends. The tubular bodies thus filled with ethyl alcohol and sealed

## Table 1

| Tube | Inner diameter, mm | Cross sectional area S or bore, $mm^2$ | A/S, $mm^{-1}$ |
|------|--------------------|----------------------------------------|----------------|
| D | 1.4 | 1.54 | 4.1 |
| E | 1.0 | 0.79 | 8.0 |
| F | 0.38 | 0.11 | 55.4 |

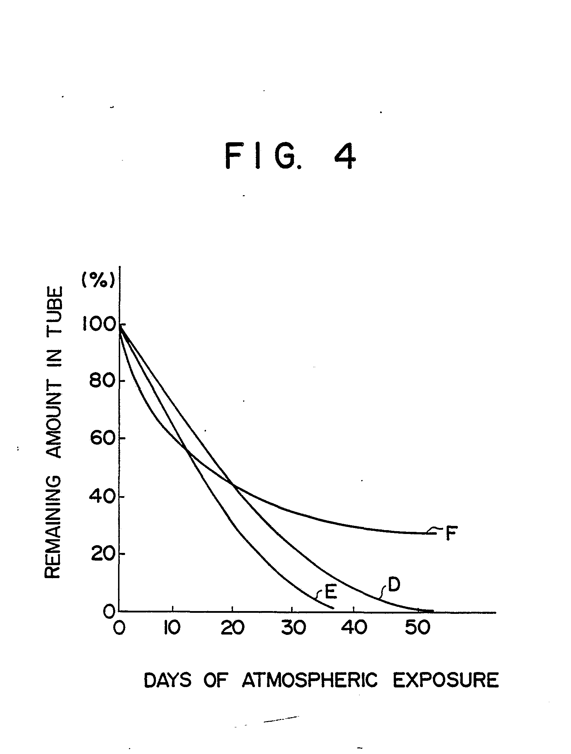

at both ends were kept standing at 25°C to examine the ve locity of releasing of ethyl alcohol through the tube walls. The results were as shown in FIGURE 4 of which each of the curves gives the percentage of the remaining amount of ethyl alcohol in the tube as a function of days of standing. As is clear from these results, the velocity of vapor releas ing from the tubular bodies D and E was satisfactorily uniform over the whole period of test while the velocity from the tubular body F was large at the initial stage with rapid decrease in addi tion to the disadvantage of the unduly small volume of ethyl alcohol initially held therein.

Example 3.

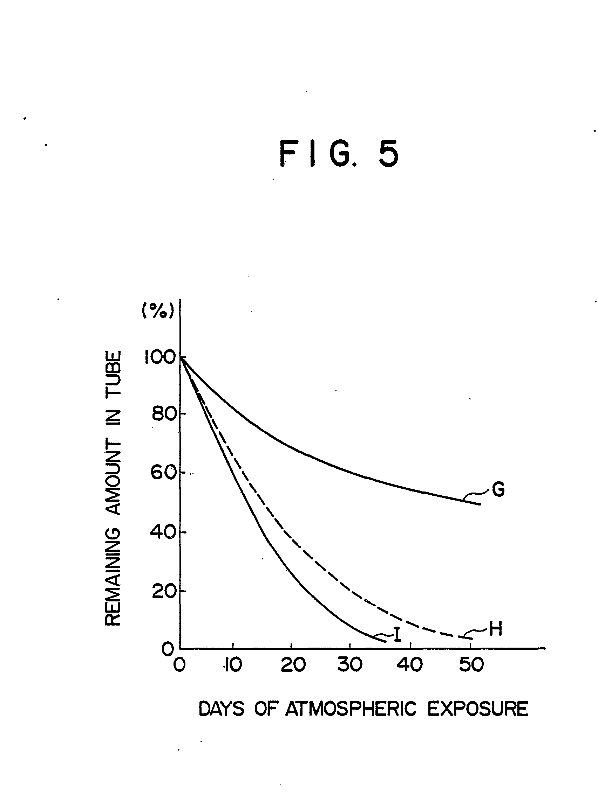

A copolymeric resin of 92 % by weight of ethylene and 8 % by weight of vinyl acetate was molded by extrusion into three tubes of different cross sectional configurations G, H and I as shown in FIGURES 2a, 2b and 2c, respectively, having dimensional parameters indicated in Table 2 below. The tubes were each cut in 100 mm lengths and filled with dodecanol followed by sealing at both ends. The tubes thus filled with dodecanol and sealed at both ends were kept standing at 30 °C to examine the velocity of releasing the dodecanol through the tube walls. The results were as shown in FIGURE 5 of which each of the curves gives the percentage of the remaining amount of dode canol in the tube as a function of days of standing. As is clear from these results, the velocity of vapor releasing from the tubu lar bodies H and I was satisfactorily uniform over the whole period of test while the velocity from the tubular body G was relatively small with rapid decrease in time.

Table 2

| Tube | Inner dimension, mm | | Outer dimension, mm | | Outer circum-ference A, mm | Cross sectional area of bore S, mm2 | A/S, mm$^{-1}$ |
|---|---|---|---|---|---|---|---|
| | Shorter side | Longer side | Shorter side | Longer side | | | |
| G | 3.0 | 3.0 | 3.7 | 3.7 | 11.6 | 7.1 | 1.6 |
| H | 0.4 | 3.0 | 1.5 | 3.7 | 10.2 | 2.2 | 4.6 |
| I | 2.0 | 4.1 | 2.7 | 4.8 | 14.0 | 6.8 | 2.q |

**Claims**

1. A tubular body for sustainedly releasing vapor of a vaporizable alcoholic substance by diffusion through the walls thereof which comprises:

(a) a tubular body shaped of a copolymeric resin of ethylene and vinyl acetate, of which the content of vinyl acetate is in the range from 1 to 20 % by weight, and having an average inner diameter in the range from 0.4 mm to 3 mm, length of outer circumference in the range from 2 to 20 mm and length of the tubular body in the range from 10 to 1,000 mm; and

(b) a vaporizable alcoholic substance at least partly filling the bore of the tubular body (a), the tubular body (a) being sealed at both ends after being filled with the vaporizable alcoholic substance.

2. The tubular body as claimed in claim 1 wherein the ratio of the length of the outer circumference in mm to the cross sectional area of the bore of the tubular body in mm$^2$ is in the range from 2 to 20 mm$^{-1}$.

3. The tubular body as claimed in claim 1 which is integrally bonded side-by-side with a wire having a diameter in the range from 0.5 to 1.5 mm and made of a metal having a Brinell hardness not exceeding 65.

4. The tubular body as claimed in claim 3 wherein the metal is copper, aluminum or an alloy thereof.

5. The tubular body as claimed in claim 3 wherein the wire is coated with a coating layer of a plastic resin.

# FIG. 1

# FIG. 2a

# FIG. 2b

# FIG. 2c

# FIG. 3

# FIG. 4

FIG. 5

DAYS OF ATMOSPHERIC EXPOSURE

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 160 151 (SHIN-ETSU CHEMICAL CO.) * Page 8, line 12 - page 9, line 13; page 11, line 2 - page 12, line 7; claims * | 1-5 | A 01 N 25/34 A 01 N 25/18 |
| X | EP-A-0 061 192 (SHIN-ETSU CHEMICAL CO.) * Page 6, line 17 - page 8, line 16; page 15, line 15 - page 17, line 14; examples; claims * | 1-5 | |
| A | PESTICIDE SCIENCE, vol. 9, no. 5, October 1978, pages 434-440, Society of Chemical Industry, Oxford, GB; D.G. CAMPION et al.: "Controlled release of pheromones" * Page 435, line 20 - page 436, line 7 * | 1 | |
| D,A | US-A-4 017 030 (M.J. COPLAN et al.) * Column 8, line 26 - column 9, line 52; column 12, lines 22-53; claims * | 1 | **TECHNICAL FIELDS SEARCHED (Int. Cl.4)** A 01 N |
| A | US-A-4 445 641 (R.W. BAKER et al.) * Column 2, lines 6-41; claims * | 1 | |

The present search report has been drawn up for all claims

| Place of search | Date of completion of the search | Examiner |
|---|---|---|
| THE HAGUE | 13-06-1986 | FLETCHER A.S. |